# EUROPEAN PATENT APPLICATION

(11) **EP 4 647 252 A1**
(43) Date of publication of application: **12.11.2025**
(21) Application number: 24174451.5
(22) Date of filing: 07.05.2024
(51) Int. Cl.: B32B 17/10, C08J 5/18, C08K 5/07, C08K 5/103, C08K 5/3475, C08L 29/14

(54) **INTERLAYER FILMS WITH UV PROTECTION FOR LAMINATED SAFETY GLASS**

(71) Applicant: Kuraray Europe GmbH, 65795 Hattersheim (DE)
(72) Inventor: Lellig, Philipp, 50670 Köln (DE)
(74) Representative: Janßen, Christian Oliver

(57) **Abstract**

The invention relates to an interlayer film for laminated glass comprising at least one polyvinyl acetal, at least one plasticizer and a mixture of a first UV absorber of formula 1: 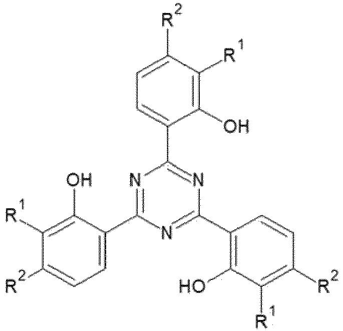 wherein R1 represents an alkyl group having 1 to 20 carbon atoms and R2 represents an alkoxy group having 1 to 20 carbon atoms
and a second UV absorber according to formula II 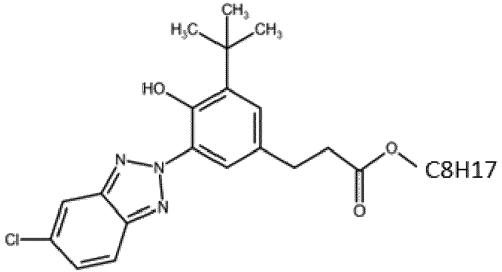 in a mass ration of first to second UV absorber of 0.2 to 0.5.

## Description

The invention relates to plasticized interlayer films based on polyvinyl acetal comprising a mixture of certain UV absorbers.

For many decades, commercially available plasticized polyvinyl butyral (PVB) film for laminated glazing has been provided with UV absorbers to both prevent the PVB film from deteriorating and to protect people or objects behind the laminated glass against harmful UV radiation.

To this end, a vast number of UV absorbers have been utilized. They not only have to protect the PVB film from UV radiation, but further need to fulfill increasing health and environmental requirements without compromising the optical properties of the film by re-agglomeration. So far, no UV absorber can fulfill all requirements perfectly and the manufactures of PVB film have to compromise in the choice of UV absorber according to the application of the film.

For example, triazine based UV absorbers as disclosed in EP4249239A1 provide a long lasting UV protection to PVB film, but tend to re-agglomerate and builds up visible spots on the surface of the film. On the other hand, liquid UV absorbers such as Riasorb UV109 as disclosed in EP2471760A1 form a homogenous mixture with the PVB film without optical disturbances, but have a too low UV absorption for nowadays standards.

Accordingly, there is still a need in the industry to identify improved UV stabilizers for laminated glass.

These and other objectives have been solved by the present invention. It has surprisingly been found that a mixture of known UV absorbers provides excellent protection against UV radiation without compromising optical properties by re-agglomeration of UV stabilizers in a synergistic effect.

Thus, object of the present invention was an interlayer film for laminated glass comprising at least one polyvinyl acetal, at least one plasticizer and a mixture of a first UV absorber of formula I: 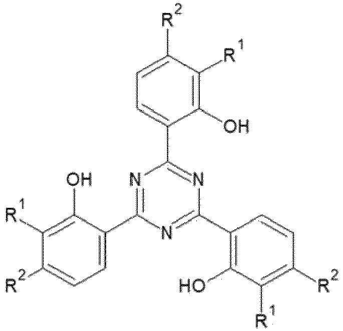
wherein R1 represents an alkyl group having 1 to 20 carbon atoms and R2 represents an alkoxy group having 1 to 20 carbon atoms
and a second UV absorber according to formula II 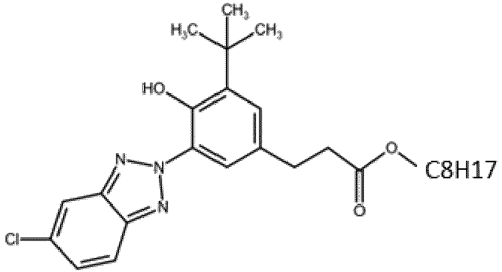
in a mass ration of first to second UV absorber of 0.1 to 0.75, preferably of 0.2 to 0.5.

It has been found by the present inventors that the triazine compounds according to formula I in combination with the compounds according to formula II are very effective UV absorbers and form a homogenous mixture with the PVB/plasticizer mixture in a way that the optical properties of the final film are not affected by re-agglomeration on the surface of the film, i.e. the films according to the invention do not show bleed-out of the combined UV absorber.

### First UV absorber

The term "alkyl" in formula I refers to a monovalent group that is a radical of an alkane and includes groups that are linear, branched, cyclic, bicyclic, or a combination thereof. The alkyl group has 1 to 20 carbon atoms. Preferably, the alkyl group contains 1 to 10 carbon atoms, more preferably 1 to 5 carbon atoms, and most preferably 1 to 3 carbon atoms. Suitable examples of alkyl groups include methyl, ethyl, propyl, isopropyl, n-butyl, sec-butyl, tert-butyl, tert-amyl, n-pentyl, n-hexyl, n-heptyl, n-octyl, n-nonyl, n-decyl, eicosanyl, cyclopropyl, cyclobutyl, cyclopentyl, cyclopentylmethyl, cyclopentylethyl, cyclopentylbutyl, cyclohexyl, cyclohexylmethyl, cyclohexylethyl, cyclohexylbutyl, methylcyclohexylmethyl, ethylcyclohexylmethyl, and ethylcyclohexylethyl. Specifically, R1 is a methyl group.

The term "alkoxy" refers to a monovalent group having an oxy group bonded directly to an alkyl group as defined above. Specifically, R2 is an n-hexyloxy group.

In a preferred embodiment, the first UV absorber is represented by formula Ia: 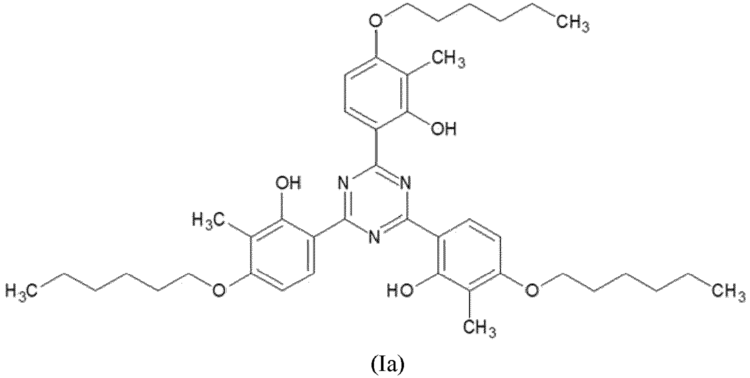 Suitable first UV absorbers according to formula I are for example available as Riasorb 470 (CAS: 222529-65-9) from Rianlon.

### Second UV absorber

Preferably, the second UV absorber is provided as mixture of two isomers according to formulars IIa and IIb 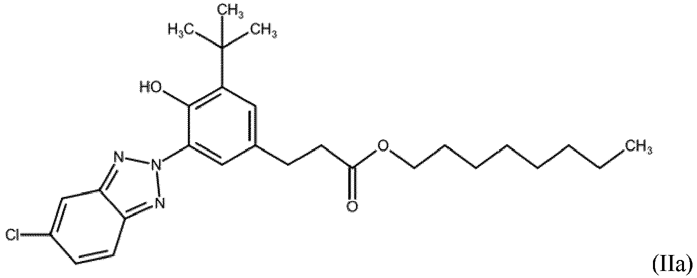 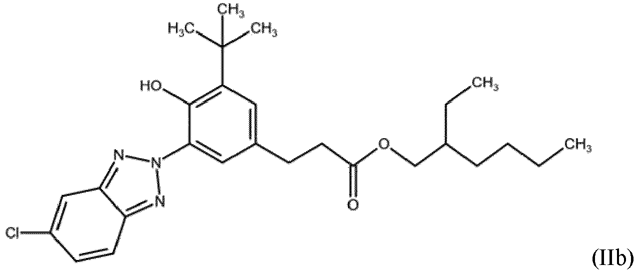 in a mass ratio IIa:IIb of 35 - 75 to 95 - 5 .

Suitable UV absorbers according to formula II are for example available as Riasorb UV-109 (CAS: 83044-89-7; 83044-90-0) from Rianlon.

The interlayer film according to the invention has preferably a combined concentration of first and second UV absorber of 0.15 to 0.3 % by weight. Should further UV absorbers (not according to formulas I and II) be added to the interlayer film, the total amount of UV absorbers present in the interlayer film is preferably less than 0.60 wt%. The total amount in wt% shall refer to the combined wt% of all different UV absorbers present in the total mass of the interlayer film.

### Polyvinyl acetal

The polyvinyl acetal used in accordance with the present invention results in particular from the reaction of at least one polyvinyl alcohol with one or more aliphatic unbranched aldehyde containing 2 to 10 carbon atoms. To this end, n-butyraldehyde is preferably used and the preferred polyvinyl acetal is polyvinyl butyral (PVB).

The interlayer films preferably contain polyvinyl acetals having a proportion of polyvinyl acetate groups of 0.1 to 20 mol %, preferably 0.5 to 3 mol %, or 5 to 8 mol %.

The polyvinyl alcohol content of the polyvinyl acetal used in the invention may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

The polyvinyl alcohol content and proportion of polyvinyl acetate groups were determined in accordance with DIN ISO 3681 (Acetate content) and DIN ISO 53240 (PVA content).

### Plasticizer

The inventive interlayer films comprise at least one plasticizer. Preferably, such plasticizer(s) can be selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

Preferred plasticizer is triethylene glycol bis (2-ethylhexanoate).

The interlayer film comprises preferable 20-40 wt% preferably 25.0 to 30.0 wt%. of at least one plasticizer.

Additionally, the interlayer film contain further additives, such as residual quantities of water, adhesion regulators, optical brighteners or fluorescent additives, colourants, processing aids, inorganic or organic nanoparticles, pyrogenic silicic acid and/or surface active substances.

Another aspect of the present invention is the use of the interlayer film described above for the manufacture of laminated glass, especially for the manufacture of museum glazing, shop window glazing, as motor vehicle glazing, aircraft glazing, in photovoltaic modules in LED or OLED screens, televisions, computer screens, large screens), in electrochromic, photochromic, photoelectrochromic glass elements.

Yet another aspect of the present invention is a laminated glass comprising the interlayer film described above.

Preferably, the yellowness index YI of the laminated glass increases less than 20%, more preferably less than 18%, even more preferably less than 15%, most preferably less than 10% after an irradiation period of 3000 hours measured according to the method described in the examples.

Also preferably, the yellowness index YI increases by less than 0.2, more preferably by less than 0.15 and most preferably by less than 0.1 after an irradiation period of 3000 hours measured according to the method described in the examples.

Also preferably, the UV transmission is equal or below 4% after an irradiation period of 3000 hours measured according to the method described in the examples.

The lamination step for producing the laminated glass is preferably carried out such that the interlayer film is positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours.

Vacuum laminators may also be used. These consist of a chamber that can be heated and evacuated, in which laminated glass can be laminated within 30 - 60 minutes. Reduced pressures from 0.01 to 300 mbar and temperatures from 100 to 200 °C, in particular 130 - 160 °C, have proven their worth in practice.

The glass film laminate may then be subjected to an autoclave process to obtain the final glass laminate.

### Examples

### Measurement of the yellowness index

In order to quantify the yellowness of the interlayer film, the yellowness index YI was measured according to ASTM E313 using a ColorQuest XE spectrophotometer in a geometry of 2° and illuminant type C.

### Measurement of the haze

The haze value according to ASTM 1003 procedure B was measured on glass laminates using a ColorQuest XE spectrophotometer in a geometry of 2° and illuminant type C.

### Measurement of light transmission

The light transmission according to EN 410:2011 was measured on glass laminates using a Perkin-Elmer Lambda 950 UV-/VIS-spectrophotometer.

### Measurement of the UV-transmission

The UV-transmission according to ISO 13837 Convention A (300 - 400 nm) was measured on glass laminates using a Perkin-Elmer Lambda 950 UV-/VIS-spectrophotometer.

### Testing of the light stability

To test their light stability, laminates were placed in a Q-Sun Xenon radiation chamber and optical measurements were done after 0, 1000, 2000, 3000, and 5000 hours. The test condition of the radiation chamber were chosen according to the "Kalahari" test program PV3929:
Filter: Daylight-Q (X-7460)
Radiation intensity @ 340 nm: 0.60 W/m2
Black standard temperature: 90°C
Chamber temperature: 50°C
Rel. humidity: 20%

### Preparation of the interlayer films

PVB-films with compositions as listed in table 1 were prepared. The UV absorber Riasorb UV-326 (CAS: 3896-11-5, first UV absorber) and Riasorb 470 (CAS: 222529-65-9, structure given in formula II, second UV absorber) are commercially available from Rianlon.

The UV absorbers were dissolved in the plasticizer 3G8 by stirring and heating to 80 °C. The interlayer films were produced by film extrusion using a Leistritz co-rotating double-screw extruder. The films were extruded through a flat slit die with a slit width of 1100 mm and cooled down in a water basin. The obtained film showed a thickness of around 0.76 mm.

Test laminates were produced using one layer of PVB film in a thickness of around 0.76 mm sandwiched between two conventional 2.1 mm automotive grade soda lime glasses (PlaniClear^{®}) in an autoclave containing the following steps: 30 min heating phase with pressurization up to 12 bar, 30 min hold time at 12 bar and 140 °C., and 30 min cooling down phase to 40 °C with concomitant release of pressure.

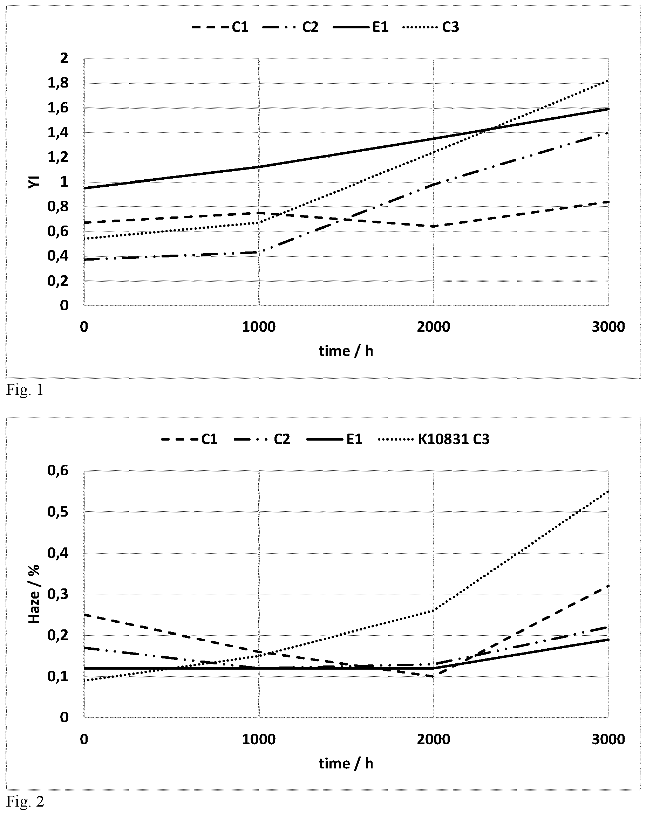

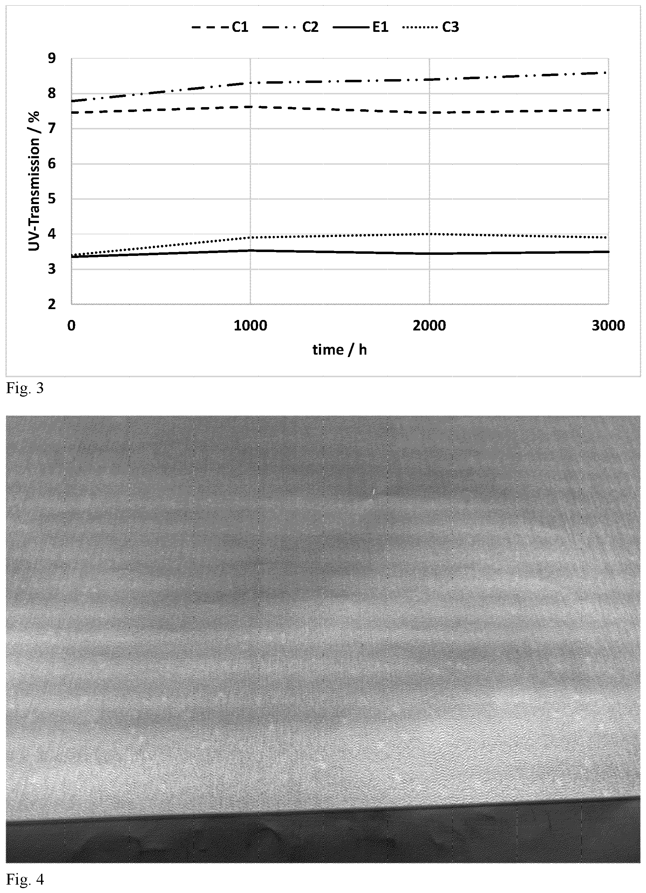

Fig 1 shows the yellowness index YI during light stability test, Fig 2 the Haze during stability test and Fig. 3 the UV transmission during stability test (all test performed as described).

Films according to the invention show over the whole measurement cycle better UV transmission as compared to films provided with one UV stabilizer in the same concentration. Only films provided with one UV stabilizer but increased (double) concentration have a comparable UV transmission (C3 in Fig. 3).

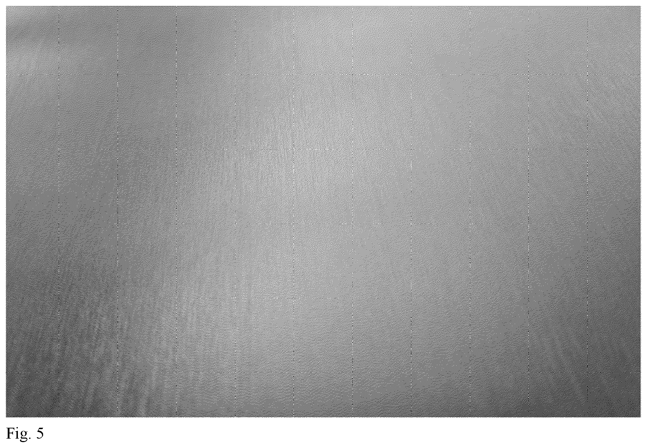

However, such increase in the concentration has the aforementioned effect of re-agglomeration of the stabilizer on the surface. This effect can be seen in Fig 4 and 5, showing the surfaces of films C3 (Fig 4) and films according to the invention E1 (Fig. 5). Fig 4 shows re-agglomerated UV stabilizer on the surface of the film, generating unwanted "blooming" spot, whereas Fig 5 shows a nearly clear film surface without re-agglomerated UV stabilizer.

Films E1 according to the invention show nearly constant and low Haze values over the whole duration of the measurement whereas the haze of film C3 having the highest concentration of UV stabilizer (necessary to reach the required level of UV absorption, compare Fig 1) increases over time to an unacceptable level (Fig. 2). Surprisingly, films E1 according to the invention show less haze than even films C1 and C2 with the same concentration of the individual UV absorbers. This effect could be due to some form of stabilization of one UV absorber by the other one, e.g. by increase of the solubility of poorly soluble solid UV 470 by the (liquid) absorber UV 109.

As can be seen from Fig. 1, the yellowness index YI of films according to the invention E1 show over time a lower value than films C3 having a higher concentration of UV stabilizer.

In summary, films according to the invention show due to the claimed combination of UV stabilizers a reduced tendency of re-agglomeration of UV stabilizer.

**Table 1**

| Description | **C1** | **C2** | **E1** | **C3** |
|---|---|---|---|---|
| Riasorb UV- 109 | | 0,1625 | 0,1625 | 0,325 |
| Riasorb 470 | 0,0625 | | 0,0625 | |
| | | | | |
| db | 0,44 | 0,23 | 0,64 | 0,52 |
| YID | 0,67 | 0,37 | 0,95 | 0,54 |
| TUV | 7,45 | 7,78 | 3,35 | 3,4 |
| L* | 96,2 | 96,21 | 96,29 | 96,16 |
| a* | -0,93 | -0,8 | -1,08 | -0,92 |
| b* | 0,9 | 0,65 | 1,17 | 0,85 |
| Haze | 0,25 | 0,17 | 0,12 | 0,09 |
| db | 0,45 | 0,25 | 0,71 | 0,58 |
| YID | 0,75 | 0,43 | 1,12 | 0,67 |
| TUV | 7,62 | 8,3 | 3,53 | 3,9 |
| Haze | 0,16 | 0,12 | 0,12 | 0,15 |
| db | 0,39 | 0,57 | 0,84 | 0,93 |
| YID | 0,64 | 0,98 | 1,35 | 1,24 |
| TUV | 7,45 | 8,39 | 3,44 | 4 |
| Haze | 0,1 | 0,13 | 0,12 | 0,26 |
| db | 0,49 | 0,81 | 0,99 | 1,29 |
| YID | 0,84 | 1,4 | 1,59 | 1,82 |
| TUV | 7,53 | 8,59 | 3,49 | 3,9 |
| Haze | 0,32 | 0,22 | 0,19 | 0,55 |

## Claims

1. An interlayer film for laminated glass comprising at least one polyvinyl acetal, at least one plasticizer and a mixture of a first UV absorber of formula I: 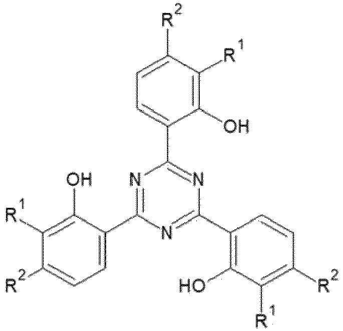
wherein R1 represents an alkyl group having 1 to 20 carbon atoms and R2 represents an alkoxy group having 1 to 20 carbon atoms
and a second UV absorber according to formula II 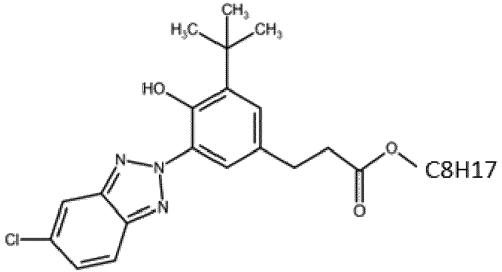
in a mass ration of first to second UV absorber of 0.1 to 0.75, preferably of 0.2 to 0.5.

2. Interlayer film according to claim 1 **characterized in that** the interlayer film has a combined concentration of first and second UV absorber of 0.15 to 0.3 % by weight

3. Interlayer film according to claim 1 or 2 **characterized in that** R1 is a methyl group.

4. Interlayer film according to any of claim 1 to 3 **characterized in that** R2 is a n-hexyloxy group.

5. Interlayer film according to any of claim 1 to 4 **characterized in that** the second UV absorber is provided as mixture of two isomers according to formulars IIa and IIb 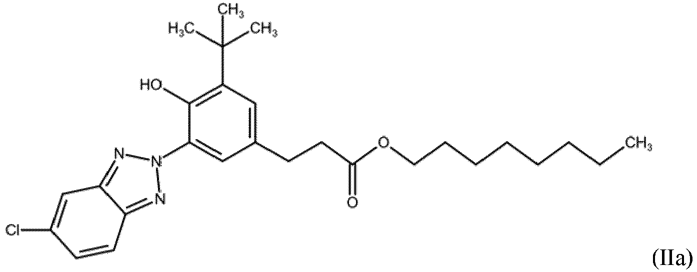 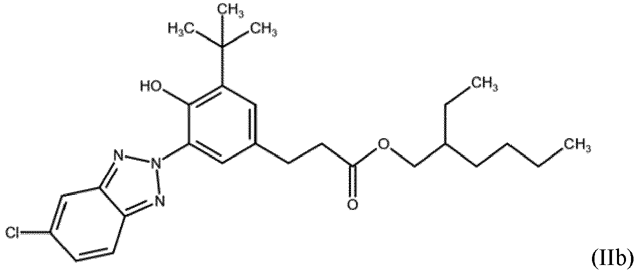 in a mass ratio of 35 - 75 to 95 - 5 .

6. The interlayer film according to any one of claims 1 to 5 wherein the total amount of UV absorbers present in the interlayer film is less than 0.60 wt%.

7. The interlayer film according to any one of claim 1 to 7 wherein the first UV absorber compound of formula II is present in the interlayer film in an amount of less than 0.20 wt%.

8. The interlayer film according to any one of claim 1 to 7 wherein the polyvinyl acetal is polyvinyl butyral.

9. The interlayer film according to any one of claim 1 to 8 wherein the plasticizer is present in the interlayer film in an amount of 20 to 35 wt%.

10. The interlayer film according to any one of claims 1 to 9 wherein the plasticizer is triethylene glycol bis (2-ethylhexanoate).

11. Use of the interlayer film according to any one of claims 1 to 10 for the manufacture of laminated glass.

12. A laminated glass comprising the interlayer film according to any one of the claims 1 to 10.

13. The laminated glass according to claim 13 wherein the yellowness index YI increases less than 20% after an irradiation period of 5000 hours measured according to the description.

14. The laminated glass according to claim 13 or 14 wherein the yellowness index YI increases by less than 0.2 after an irradiation period of 5000 hours measured according to the description.

15. The laminated glass according to any one of the claims 12 to 14 wherein the UV transmission is equal or below 4% after an irradiation period of 5000 hours measured according to the description.
